# DEMANDE DE BREVET EUROPEEN

(11) **EP 1 159 862 A1**
(43) Date de publication de la demande: **05.12.2001**
(21) Numéro de dépôt: 01470015.7
(22) Date de dépôt: 28.05.2001
(51) Int. Cl.: A01B 1/04

(54) **Bêche manuelle à fragmenter**

(30) Priorité: 30.05.2000 FR 0006929; 06.10.2000 FR 0012756
(71) Demandeur: Iskandar, Santi, 54360 Barbonville (FR)
(72) Inventeur: Iskandar, Santi, 54360 Barbonville (FR)
(74) Mandataire: Ballot, Paul Denis Jacques

(57) **Abrégé**

La bêche manuelle à fragmenter comporte une pluralité de dents s'étendant sensiblement parallèlement à partir d'une traverse (13) liée à une extrémité d'un manche de manoeuvre (2). Elle comporte au moins une rangée de dents inférieures (12) et une rangée de dents supérieures (11), les dites rangées étant respectivement situées dans des plans espacés sensiblement parallèles.

## Description

La présente invention concerne un outil de jardinage manuel pour soulever, aérer, et fragmenter des terres cultivables, notamment des terres lourdes, tassées, croûtées, etc., afin de réduire notablement la fatigue, en particulier au niveau des reins de l'utilisateur.

Pour effectuer un labour de terrains de relativement petite surface, il est connu d'utiliser par exemple un motoculteur à fraises rotatives, ou une simple bêche classique. Le travail à la bêche dans un terrain lourd est rapidement harassant. Avec un motoculteur, le rendement est rapidement réduit si la terre est lourde et collante, les fraises se colmatant rapidement et ne pénétrant plus alors suffisamment dans le sol.

On connaît déjà, pour faciliter le travail de terres de ce type, des outils appelés fourches-bêches, comportant généralement une rangée de quelques dents pointues et de section aplatie, la pluralité de dents pointues facilitant la pénétration dans le sol par rapport à la lame de coupe continue d'une bêche classique, et la surface des dents étant accrue par rapport à une simple fourche pour fournir un meilleur effet d'appui sur le sol et de soulèvement de la terre travaillée.

La présente invention a pour but d'apporter un perfectionnement à ces outils pour faciliter encore le travail de la terre, améliorer l'effet d'aération et de fragmentation, et réduire la fatigue de l'utilisateur.

Avec ces objectifs en vue, l'invention a pour objet une bêche manuelle à fragmenter, comportant une pluralité de dents s'étendant sensiblement parallèlement à partir d'une traverse liée à une extrémité d'un manche de manoeuvre, caractérisée en ce qu'elle comporte au moins une rangée de dents inférieure et une rangée de dents supérieure, les dites rangées étant respectivement situées dans des plans espacés sensiblement parallèles.

Lors du travail, après avoir enfoncé les dents dans le sol et initié le mouvement de levier classique effectué avec une bêche, les deux rangées de dents agissent sur la terre, mais la rangée de dents inférieure a notamment un effet d'appui sur le terrain en place, alors que la rangée supérieure a au contraire essentiellement un effet de soulèvement et de fragmentation de la couche de surface du sol. La dissociation de ces fonctions, due à l'effet de levier accru provoqué par l'écartement entre les plans des rangées de dents inférieure et supérieure, permet d'assurer une meilleure efficacité du travail de la terre, et avec des efforts moindres.

Il est à noter que la bêche à fragmenter selon l'invention n'est pas destinée à effectuer le labour proprement dit, mais à préparer le sol en fragmentant la terre, de sorte que le labour sera ensuite plus facile à effectuer par exemple par une bêche classique ou par un outil de type fraise à labourer tel que décrit dans le document EP 0985335.

Un autre avantage résulte du fait que l'implantation de deux rangées de dents sur la traverse conduit à pouvoir avoir un meilleur appui du pied sur la traverse pour faire pénétrer l'outil dans le sol.

Préférentiellement, les dents de la rangée supérieure sont intercalées, dans la direction de la traverse, par rapport aux dents de la rangée inférieure. On pourra ainsi avoir par exemple, pour une bêche de faible largeur, deux dents inférieures, situées aux extrémités de la traverse, et une seule dent supérieure en position médiane, ou pour une bêche plus large, trois dents en rangée inférieure et deux dents en rangée supérieure, situées en des positions intermédiaires entre les dents inférieures. Le nombre de dents de chaque rangée peut encore être différent, et notamment supérieur.

Préférentiellement encore, les dents de la rangée supérieure sont plus courtes que les dents de la rangée inférieure, pour aussi faciliter l'effet de fragmentation en réduisant l'effort nécessaire à la coupe de la couche de surface du sol par rapport à la pression d'appui des dents inférieures.

Pour améliorer encore l'effet de levier, les dents de la rangée inférieure présentent à proximité de leurs raccordements sur la traverse, un talon proéminent vers le dessous, qui vise à constituer le point d'appui très rapidement après le début du mouvement de levier, de sorte que la poursuite du mouvement tende à déplacer vers le haut les dents supérieures mais aussi la plus grande partie située vers la pointe de chaque dent inférieure, ce qui favorise donc l'aération et la fragmentation de la terre. De plus, l'ensemble de l'outil a ainsi tendance à moins s'enfoncer, ce qui permet à l'utilisateur de moins se baisser, et limite fatigue et efforts au niveau du dos.

Selon d'autres dispositions particulières de l'invention ;
les dents de la rangée inférieure ont, sur au moins une partie de leur longueur, une section de forme générale aplatie,
les dents de la rangée inférieure présentent une arrête de renfort inférieure,
les dents de la rangée supérieure ont une section de forme générale triangulaire, constituant une arête supérieure,
les dents de la rangée supérieure présentent des faces latérales concaves.

Préférentiellement encore, le manche est oblique par rapport aux plans des rangées de dents, ce qui contribue également à limiter le déplacement du manche vers le bas lors du bêchage, pour réduire la fatigue de l'utilisateur. Egalement selon une autre disposition préférée, le manche est pourvu d'une poignée complémentaire, s'étendant vers le haut obliquement par rapport au manche, cette poignée évite à l'utilisateur de devoir trop se courber, en permettant de poursuivre le mouvement vers le bas et l'effort de bêchage, par la seconde main appuyant sur la dite poignée.

D'autres caractéristiques et avantages apparaîtront dans la description qui va être faite d'une bêche à fragmenter conforme à l'invention.

On se reportera aux dessins annexés dans lesquels :
- la figure 1 est une vue en perspective de la bêche, en position de travail,
- la figure 2 est une vue latérale de la bêche,
- la figure 3 est une vue latérale partielle d'une variante de forme des dents,
- les figures 4 à 6 représentent diverses formes de section des dents.

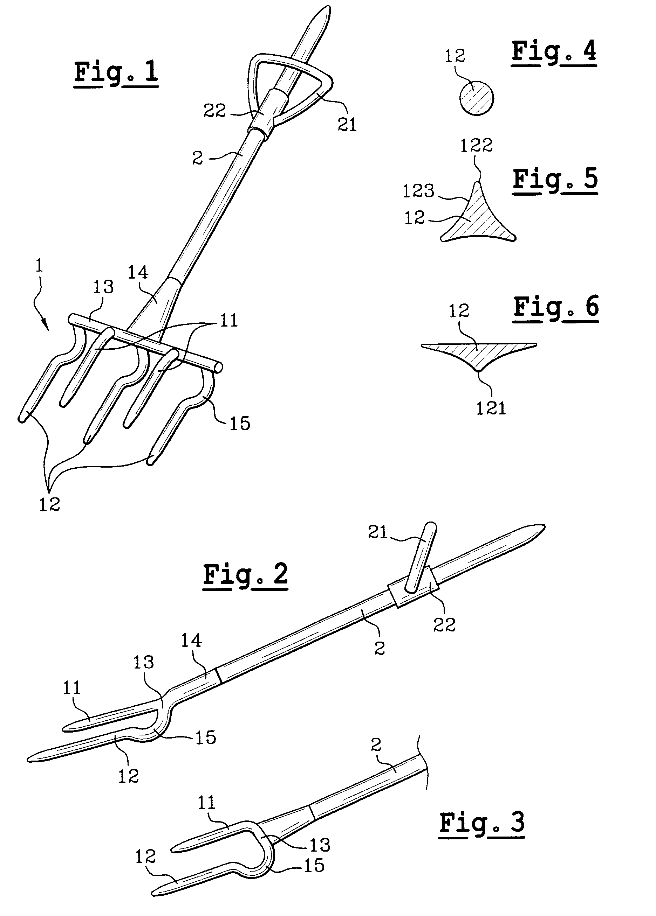

La bêche représentée figure 1 comporte une tête d'outil 1 emmanchée sur un manche 2 de type classique.

La tête 1 comporte une rangée de dents supérieures 11 et une rangée de dents inférieures 12, toutes les dents étant liées rigidement sur une traverse métallique 13. La traverse 13 porte également une buse tubulaire 14 de liaison sur le manche, apte à assurer une liaison rigide notamment résistant en torsion.

Le manche porte une poignée complémentaire 21 solidaire d'un manchon 22 inséré sur le manche et également lié en rotation sur celui-ci, par exemple à environ deux tiers de sa longueur à partir de la tête d'outil. La poignée peut être une simple tige terminée par un bouton de préhension, et s'étendant obliquement vers le haut par rapport au manche 2.

Préférentiellement, elle est réalisée sous la forme d'une poignée creuse, telle que représentée sur les dessins, permettant une meilleure préhension par la main qui ne tient pas le manche 2, et facilitant la manipulation pour déverser ou basculer la terre vers la droite ou la gauche, par un effet de rotation du manche autour de son axe, imprimé au moyen de la dite poignée complémentaire.

Comme on le voit bien figure 2, les plans des rangées de dents sont légèrement inclinés par rapport à la direction longitudinale du manche. Le manche pourrait aussi être lui-même légèrement coudé.

Les dents supérieures 11 sont implantées sur la traverse 13, par exemple par soudure, dans un plan qui est sensiblement en prolongement du manche, comme représenté figure 2, ou légèrement décalé vers le haut, comme dans la variante représentée figure 3.

Les dents inférieures 12 sont plus longues que les dents supérieures, et sont raccordées sur la traverse 13 par un arrondi ou bossage formant un talon 15 qui sert d'appui pour favoriser le mouvement de levier, comme indiqué précédemment.

Les dents peuvent avoir diverses sections, par exemple ronde, comme représenté figure 4, triangulaire, (figure 5), aplatie et éventuellement pourvue d'une arête de renfort (figure 6), etc., adaptées en fonction de la densité de la terre par exemple. Les dents d'une même rangée peuvent avoir des profils différents, et chaque dent peut même avoir un profil variable sur sa longueur.

Préférentiellement, les dents 12 de la rangée inférieure auront une section telle que celle de la figure 6, avec l'arête de raidissement 121 située vers le dessous, offrant ainsi une surface d'appui relativement importante sur la terre pour éviter que ces dents ne s'enfonce trop lors de l'effort de bêchage exercé, pour que, en conséquence, les dents du dessus 11 aient un effet maximal de soulèvement et de fragmentation. Pour cela, encore préférentiellement, les dents 11 de la rangée supérieure auront une section arrondie, ou mieux encore en triangle avec une pointe 122 orientée vers le haut pour former une arête coupant plus facilement la terre, et des côtés incurvés 123, pour former des faces latérales de la dent concaves, bien adaptées pour poursuivre l'effet de fragmentation lorsque la dent remonte à travers la terre.

A titre d'exemple, une bêche selon l'invention a les dimensions suivantes :
Longueur des dents supérieures : 15 cm
Longueur des dents inférieures : 18 cm
Espacement entre les dents d'une même rangée :12 cm
Espacement entre les deux rangées de dents : 5 cm
Largeur des dents inférieures : 12 mm
Section des dents supérieures : 10 mm à la base et hauteur de 12 mm
Longueur du manche : 90 cm
Longueur de la poignée complémentaire : environ 15 cm - angle 40° - largeur de la poignée de 12 cm

Bien entendu, ces dimensions ne sont nullement limitatives. De même, le nombre de dents, la forme de la section des dents, du talon et de leur implantation sur la traverse pourront être modifiés sans sortir du cadre de l'invention.

## Revendications

1. Bêche manuelle à fragmenter, comportant une pluralité de dents s'étendant sensiblement parallèlement à partir d'une traverse (13) liée à une extrémité d'un manche de manoeuvre (2), **caractérisée en ce qu'**elle comporte au moins une rangée de dents inférieures (12) et une rangée de dents supérieures (11), les dites rangées étant respectivement situées dans des plans espacés sensiblement parallèles.

2. Bêche manuelle à fragmenter selon la revendication 1, **caractérisée en ce que** les dents (11) de la rangée supérieure sont intercalées, dans la direction de la traverse (13), par rapport aux dents (12) de la rangée inférieure.

3. Bêche manuelle à fragmenter selon la revendication 1, **caractérisée en ce que** les dents (11) de la rangée supérieure sont plus courtes que les dents (12) de la rangée inférieure.

4. Bêche manuelle à fragmenter selon la revendication 1, **caractérisée en ce que** les dents (12) de la rangée inférieure présentent à proximité de leur raccordement sur la traverse, un talon (15) proéminent vers le dessous.

5. Bêche manuelle à fragmenter selon la revendication 1, **caractérisée en ce que** les dents (12) de la rangée inférieure ont, sur au moins une partie de leur longueur, une section de forme générale aplatie.

6. Bêche manuelle à fragmenter selon la revendication 5, **caractérisée en ce que** les dents (12) de la rangée inférieure présentent une arrête de renfort inférieure (121).

7. Bêche manuelle à fragmenter selon la revendication 1, **caractérisée en ce que** les dents (11) de la rangée supérieure ont une section de forme générale triangulaire, constituant une arête supérieure (122).

8. Bêche manuelle à fragmenter selon la revendication 7, **caractérisée en ce que** les dents (11) de la rangée supérieure présentent des faces latérales concaves (123).

9. Bêche manuelle à fragmenter selon la revendication 1, **caractérisée en ce que** le manche (2) est pourvu d'une poignée complémentaire (21), s'étendant vers le haut obliquement par rapport au manche.

10. Bêche manuelle à fragmenter selon la revendication 1, **caractérisée en ce que** le manche (2) est oblique par rapport aux plans des rangées de dents.
